# EUROPÄISCHE PATENTSCHRIFT

(11) **EP 4 560 915 B1**
(45) Veröffentlichungstag und Bekanntmachung des Hinweises auf die Patenterteilung: **26.08.2026**
(21) Anmeldenummer: 24210807.4
(22) Anmeldetag: 05.11.2024
(51) Int. Cl.: H02P 5/74, H02P 27/08

(54) **VERFAHREN ZUR GLEICHZEITIGEN ANSTEUERUNG EINES DREISTRÄNGIGEN MOTORS IN EINEM ZWEIPHASIGEN BETRIEB UND EINES EINSTRÄNGIGEN MOTORS, MOTORSTEUERUNG UND ELEKTRISCHES HAUSHALTSGERÄT**
METHOD FOR SIMULTANEOUSLY ACTUATING A THREE-PHASE MOTOR IN A TWO-PHASE OPERATION AND A SINGLE-PHASE MOTOR, MOTOR CONTROLLER AND ELECTRIC HOUSEHOLD APPLIANCE
PROCÉDÉ DE COMMANDE SIMULTANÉE D'UN MOTEUR À TROIS BRINS DANS UN FONCTIONNEMENT À DEUX PHASES ET D'UN MOTEUR À SIMPLE BRIN, CONTRÔLEUR DE MOTEUR ET APPAREIL ÉLECTROMÉNAGER

(30) Priorität: 27.11.2023 DE 102023133065
(43) Veröffentlichungstag der Anmeldung: 28.05.2025
(73) Patentinhaber: Miele & Cie. KG, 33332 Gütersloh (DE)
(72) Erfinder: Sammoud, Hafedh, 8090 Kelibia (TN)

(56) Entgegenhaltungen:
- DE-A1- 10 207 232
- DE-A1- 102021 132 938

## Beschreibung

Verfahren zur gleichzeitigen Ansteuerung eines dreisträngigen Motors in einem zweiphasigen Betrieb und eines einsträngigen Motors, Motorsteuerung und elektrisches Haushaltsgerät

Die Erfindung betrifft ein Verfahren zur gleichzeitigen Ansteuerung eines dreisträngigen Motors in einem zweiphasigen Betrieb und eines einsträngigen Motors, eine Motorsteuerung und ein elektrisches Haushaltsgerät. Insbesondere betrifft die Erfindung ein Verfahren zur gleichzeitigen Ansteuerung eines dreisträngigen Motors in einem zweiphasigen Betrieb und eines einsträngigen Motors eines elektrischen Haushaltsgeräts mittels eines dreiphasigen Umrichters derart, dass der dreisträngige Motor mittels einer ersten Phase und einer zweiten Phase des dreiphasigen Umrichters bestromt wird und der einsträngige Motor mittels der zweiten Phase und einer dritten Phase des dreiphasigen Umrichters bestromt wird, sowie eine Motorsteuerung, die den Umrichter aufweist, der ausgebildet das Verfahren aufzuführen, und ein elektrisches Haushaltsgerät, das die Motorsteuerung enthält.

Diese Verfahren ist sowohl für dreisträngige Motoren in Stern- als auch in Dreieckschaltung anwendbar.

Im Kontext dieser Erfindung ist "zweiphasiger Betrieb" so zu verstehen, dass zum gleichen Zeitpunkt jeweils (nur) zwei Phasen bestromt werden. Im Falle eines dreiphasigen Motors werden zu jedem Zeitpunkt daher zwei Phasen bestromt und eine Phase wird nicht bestromt. Der Motor wird lediglich über zwei von drei Wicklungssträngen angesteuert (bestromt), wobei der dritte Strang stromlos bleibt. Es werden daher nur zwei der drei Phasen des Wechselrichters genutzt.

DE 10 2021 132 938 A1 beschreibt einen gleichzeitigen, geregelten Betrieb von zwei einsträngigen Motoren an einem dreiphasigen B6 Umrichter bei variablen und auch voneinander unterschiedlichen Drehzahlen. Es ist jedoch wünschenswert einen dreisträngigen und einen einsträngigen Motor gleichzeitig anzusteuern.

DE 102 07 232 A1 beschreibt eine gleichzeitige Ansteuerung mittels eines dreiphasigen Umrichters einen dreisträngigen Motor und einen einsträngigen Motor. Der Umrichter mit seiner Brückenschaltung für den dreisträngigen Motor des Hauptantriebs wird über einen in dessen ausgangsseitigen Motorleitungen eingeschalteten Umschaltersatz einpolig oder mehrpolig auf den einsträngigen Motor des Hilfsantriebs umgeschaltet; oder im Umrichter werden aus dem Gleichspannungs-Zwischenkreis zwei Halb-Brückenschaltungen parallel betrieben, die dem Haupt- und dem Hilfsantrieb zugeordnet sind. Solche Schaltungsvarianten ermöglichen mit dem an sich für den Hauptantrieb konzipierten Umrichter über die Steuerung der Drehzahl oder der Drehrichtung des Hilfsantriebs zusätzliche strömungsabhängige Funktionen.

Der Erfindung stellt sich somit das Problem, ein Verfahren, eine Motorsteuerung und ein elektrisches Haushaltsgerät bereitzustellen, die ausgebildet sind, bei gleichzeitigem Betrieb eines dreisträngigen Motors zusammen mit einem einsträngigen Motor diese mit variablen und auch voneinander unterschiedlichen Drehzahlen mittels eines dreiphasigen Umrichters zu betreiben.

Erfindungsgemäß wird dieses Problem durch ein Verfahren mit den Merkmalen des Patentanspruchs 1, eine Motorsteuerung mit den Merkmalen des Patentanspruchs 6 und einem elektrischen Haushaltsgerät mit den Merkmalen des Patentanspruchs 8 gelöst. Vorteilhafte Ausgestaltungen und Weiterbildungen der Erfindung ergeben sich aus den nachfolgenden Unteransprüchen.

Die mit der Erfindung erreichbaren Vorteile bestehen in der Bereitstellung eines Modulationsverfahrens, mit dem gleichzeitig ein dreisträngiger Motor zusammen mit einem einsträngigen Motor mittels eines dreiphasigen Umrichters mit variablen und auch voneinander unterschiedlichen Drehzahlen betrieben werden können. Der dreisträngige Motor kann zweiphasig betrieben werden.

Die Erfindung betrifft ein Verfahren zur gleichzeitigen Ansteuerung eines dreisträngigen Motors in einem zweiphasigen Betrieb und eines einsträngigen Motors eines elektrischen Haushaltsgeräts mittels eines dreiphasigen Umrichters derart, dass der dreisträngige Motor mittels einer ersten Phase und einer zweiten Phase des dreiphasigen Umrichters bestromt wird und der einsträngige Motor mittels der zweiten Phase und einer dritten Phase des dreiphasigen Umrichters bestromt wird, wobei der dreisträngige Motor in der ersten Phase mittels eines ersten Leistungsschalters und eines zweiten Leistungsschalters komplementär geschaltet wird und in der zweiten Phase mittels eines dritten Leitungsschalters und eines vierten Leistungsschalters komplementär geschaltet wird, wobei das Verfahren folgende Schritte aufweist:
a) Takten der zweiten Phase des Umrichters mittels Pulsweitenmodulation mit einem vorgegebenen Tastverhältnis des dritten Leistungsschalters und des vierten Leistungsschalters;
b) Berechnen einer Schaltzeit der ersten Leistungsschalters aus Sollwerten der Sollspannung der ersten Phase und der Sollspannung der zweiten Phase,
wobei der Schritt b) einen Schritt b1) Berechnen eines Potentials eines Sternpunktes bei dem in Schritt a) vorgegebenen Tastverhältnis und einen Schritt b2) Berechnen der Einschaltzeit des ersten Leistungsschalters mittels des berechneten Potentials des Sternpunktes bei dem in Schritt a) vorgegebenen Tastverhältnis aufweist.

Der erste Leistungsschalter ist bevorzugt ein High-Side-Leistungsschalter, während der zweite Leistungsschalter bevorzugt ein Low-Side-Leistungsschalter ist. Der dritte Leistungsschalter ist bevorzugt ein High-Side-Leistungsschalter, während der vierte Leistungsschalter bevorzugt ein Low-Side-Leistungsschalter ist. Die Leistungsschalter sind z.B. als Transistoren (Bipolar-Transistoren IGBT, Feldeffekt-Transistoren MOS-FET, ...) ausgebildet. Das Tastverhältnis der Pulsweitenmodulation kann zwischen 0% und 100% betragen.

In einer bevorzugten Ausführungsform weist der Schritt b1) das Berechnen des Potentials des Sternpunktes bei dem in Schritt a) vorgegebenen Tastverhältnis anhand einem Phasenpotential der zweiten Phase und der Sollspannung der zweiten Phase auf. Bevorzugt ist das Potential des Sternpunktes bei dem in Schritt a) vorgegebenen Tastverhältnis eine Differenz des Phasenpotentials der zweiten Phase und der Sollspannung der zweiten Phase.

Alternativ oder zusätzlich bevorzugt weist der Schritt b1) das Berechnen des Potentials des Sternpunktes bei dem in Schritt a) vorgegebenen Tastverhältnis anhand folgender Formel (1) auf: $Uharm = U 20 - Us 2$ wobei Uharm das Potential des Sternpunktes bei dem in Schritt a) vorgegebenen Tastverhältnis darstellt, U20 das Phasenpotential der zweiten Phase darstellt und Us2 die Sollspannung der zweiten Phase darstellt.

Genauer stellt U20 einen Mittelwert über eine PWM-Periode des Potentials der zweiten Phase zum Minuspol des Spannungszwischenkreises dar, der auch als "Umrichter Minus-Potential", "Ground" oder "GND" bezeichnet werden kann. Genauer stellt Uharm einen Sollwert des Mittelwerts des Potentials des Sternpunktes zum Umrichter minus-Potential dar. Genauer stellt Us2 den Sollwert der Phasenspannung des zweiten Motorstrangs dar.

Bevorzugt weist der Schritt b2) das Berechnen der Einschaltzeit des ersten Leistungsschalters anhand des in dem Schritt b1) berechneten Potentials des Sternpunktes bei dem in Schritt a) vorgegebenen Tastverhältnis, einer Sollspannung der ersten Phase und einer Amplitude einer Zwischenkreisspannung auf.

Alternativ oder zusätzlich bevorzugt weist der Schritt b2) das Berechnen der Einschaltzeit des ersten Leistungsschalters anhand folgender Formel (2) auf: $T 1 on = Tpwm x \left(Us1+Uharm\right) / Udc$ wobei T1on die Einschaltzeit des ersten Leistungsschalters darstellt, Tpwm eine feste Periodendauer der Pulsweitenmodulation darstellt, Us1 die Sollspannung der ersten Phase darstellt, Uharm das Potential des Sternpunktes bei dem in Schritt a) vorgegebenen Tastverhältnis darstellt und Udc die Amplitude der Zwischenkreisspannung darstellt.

Genauer stellt Us1 den Sollwert der Phasenspannung des ersten Motorstrangs dar. Genauer stellt Udc die Zwischenkreisspannung des Umrichters dar, welche aus der gleichgerichteten Netzeingangsspannung erzeugt wird und die auf den Minuspol des Spannungszwischenkreises bezogen ist. Genauer stellt Uharm einen Sollwert des Mittelwerts des Potentials des Sternpunktes zum Umrichter minus-Potential dar.

Bevorzugt wird eine Einschaltzeit des dritten Leistungsschalters so gewählt, dass ein fixes Phasenpotential der zweiten Phase auf vorzugsweise Udc/2 entsteht. Das Phasenpotential der zweiten Phase wird bevorzugt eingestellt anhand der Formel (3) $U 20 = Udc x T 3 on / Tpwm$ wobei U20 das Phasenpotential der zweiten Phase darstellt, Udc die Amplitude der Zwischenkreisspannung darstellt, T3on die Einschaltzeit des dritten Leistungsschalters darstellt und Tpwm eine feste Periodendauer der Pulsweitenmodulation darstellt.

Weitere Spannungen sind auch zwischen GND und UDC möglich. Z.B. zwischen 10% und 90%. Dies kann Vorteile bei der Auslegung des Motors (Wicklungsauslegung, Spannung im Nennbetriebspunkt) haben.

Bevorzugt werden die erste, zweite und/oder dritte Phase der Motoren jeweils mit einem vorbestimmten PWM-Muster angesteuert. Alternativ oder zusätzlich bevorzugt erzeugt der Umrichter Pseudo-Sinussignale mittels Pulsweitenmodulation.

Die Erfindung betrifft ferner eine Motorsteuerung, die einen Umrichter aufweist, der ausgebildet ist, einen dreisträngigen Motor in einem zweiphasigen Betrieb und einen einsträngigen Motors eines elektrischen Haushaltsgeräts gemäß einem Verfahren nach einer oder mehrerer der vorangehend beschriebenen Ausführungsformen gleichzeitig anzusteuern.

Der Umrichter weist bevorzugt eine B6 Brücke mit dem ersten Leistungsschalter, dem zweiten Leistungsschalter, dem dritten Leistungsschalter, dem vierten Leistungsschalter, einem fünften Leistungsschalter und einem sechsten Leistungsschalter und eine Steuereinrichtung auf, die ausgebildet ist die ersten bis sechsten Leistungsschalter zu steuern, wobei der einsträngige Motor bevorzugt in der dritten Phase mittels des fünften Leistungsschalters und des sechsten Leistungsschalters komplementär geschaltet wird.

Der Umrichter weist bevorzugt die B6-Brücke auf. Er weist bevorzugt eine erste H-Brücke auf, die ausgebildet ist, den dreisträngigen Motor zu betreiben, und eine zweite H-Brücke auf, die ausgebildet ist, den einsträngigen Motor zu betreiben. Die erste H-Brücke weist bevorzugt eine erste Halbbrücke und eine zweite Halbbrücke auf. Die zweite H-Brücke weist bevorzugt die zweite Halbbrücke und eine dritte Halbbrücke auf. Die erste Halbbrücke weist bevorzugt den ersten Leistungsschalter und den zweiten Leistungsschalter auf, die zweite Halbbrücke weist bevorzugt den dritten und den vierten Leistungsschalter auf, und die dritte Halbbrücke weist bevorzugt den fünften und sechsten Leistungsschalter auf. Der dreisträngige Motor und der einsträngige Motor können daher über die zweite Halbbrücke gemeinsam betrieben werden.

Die Erfindung betrifft ferner ein elektrisches Haushaltsgerät, das einen dreisträngigen Motor und einen einsträngigen Motors und die Motorsteuerung nach einer oder mehreren der vorangehend beschriebenen Ausführungsformen aufweist.

Bevorzugt ist das elektrische Haushaltsgerät als wasserführendes elektrisches Haushaltsgerät ausgebildet. Bevorzugter ist das elektrische Haushaltsgerät als Geschirrspüler, Desinfektor, Waschautomat, Waschtrockner oder Trockner ausgebildet. Besonders bevorzugt ist das elektrische Haushaltsgerät ein Geschirrspüler.

In einer bevorzugten Ausführungsform ist der dreisträngige Motor ein Motor einer Umwälzpumpe. Bevorzugt ist der einsträngige Motor ein Motor einer Ablaufpumpe oder ein Motor eines Heißluftgebläses. Das elektrische Haushaltsgerät kann auch mehrere einsträngige Motoren aufweisen, die jeweils einzeln gleichzeitig mit dem dreisträngigen Motor ansteuerbar sind. Beispielsweise weist es zwei einsträngige Motoren auf, die von denen einer ein Motor einer Ablaufpumpe ist und der andere ein Motor eines Heißluftgebläses ist. Die Motorsteuerung enthält dann z.B. ein Relais zum Schalten zwischen den beiden einsträngigen Motoren.

Ein Ausführungsbeispiel der Erfindung ist in den Zeichnungen rein schematisch dargestellt und wird nachfolgend näher beschrieben. Es zeigt schematisch und nicht maßstabsgerecht
- Fig. 1: ein Schaltbild einer erfindungsgemäßen Motorsteuerung; und
- Fig. 2: ein Ablaufdiagramm eines erfindungsgemäßen Verfahrens.

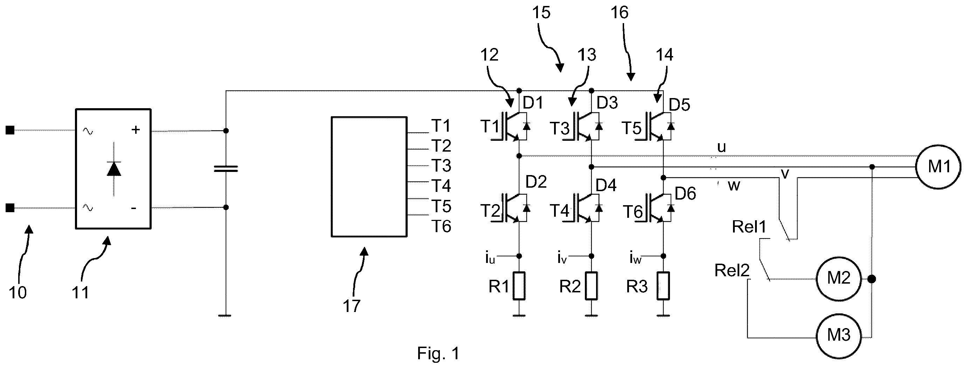

Fig. 1 zeigt ein Schaltbild einer erfindungsgemäßen Motorsteuerung. Die Motorsteuerung weist den Umrichter mit einer B6 Brücke auf. Die B6 Brücke weist eine erste Halbbrücke 12 und eine zweite Halbbrücke 13 auf, die gemeinsam eine erste H-Brücke 15 bilden. Die erste Halbbrücke 12 weist einen ersten High-Side-Leistungsschalter T1, einen zweiten Low-Side-Leistungsschalter T2, eine erste Diode D1, eine zweite Diode D2 und einen ersten Messwiderstand R1 als ersten Shunt auf. Die zweite Halbbrücke 13 weist einen dritten High-Side-Leistungsschalter T3, einen vierten Low-Side-Leistungsschalter T4, einer dritte Diode D3, eine vierte Diode D4 und einen zweiten Messwiderstand R2 als zweiten Shunt auf. Die zweite Halbbrücke 13 und eine dritte Halbbrücke 14 bilden eine zweite H-Brücke 16. Die dritte Halbbrücke weist einen fünften High-Side-Leistungsschalter T5, einen sechsten Low-Side-Leistungsschalter T6, eine fünfte Diode D5, eine sechste Diode D6 und einen dritten Messwiderstand R3 als dritten Shunt auf.

Die Motorsteuerung ist zur gleichzeitigen Ansteuerung eines dreisträngigen Motors M1 in einem zweiphasigen Betrieb und eines einsträngigen Motors - hier rein beispielhaft zweier einsträngiger Motoren M2, M3 - beschrieben. Sie kann aber auch nur zur Ansteuerung eines einsträngigen Motors ausgelegt sein. Wenn die Motorsteuerung die zwei einsträngigen Motoren M2, M3 aufweist, weist sie ein Relais Rel1 und ein weiteres Relais Rel 2 auf. Diese Relais müssen nicht in der Motorsteuerung vorhanden sein, wenn sie nur einen der zwei einsträngigen Motoren M2, M3 aufweist. Der dreisträngige Motor M1 wird mittels einer ersten Phase U und einer zweiten Phase V des dreiphasigen U, V, W Umrichter bestromt bzw. mit Strom iᵤ, iᵥ versorgt, und der einsträngige Motor M2, M3 wird mittels der zweiten Phase V und einer dritten Phase W mittels des dreiphasigen U, V, W Umrichters bestromt bzw. mit Strom iᵥ, i_{w} versorgt.

Mittels des Rel 1 wird eine Phase W zwischen dem einsträngigen Motor M1 und der Motorsteuerung getrennt. Stattdessen wird damit einer der beiden einsträngigen Motoren M2, M3 eingeschaltet. Mit dem weiteren Relais Rel2 kann zwischen dem einsträngigen Motor M2 und dem einsträngigen Motor M3 gewechselt werden. Die Motoren M1, M2 oder M3 sind an einer Phase V zusammengeschlossen. Wenn das Relais Rel1 umgeschaltet wird, läuft der Motor M1 zweiphasig an Phase U und Phase V weiter. Wird nun einer der einsträngigen Motoren M2 oder M3 bestromt an der Phase W und Phase V, dann fließt über die Phase V der Summenstrom beider Motoren M1, M2 oder M3. Ob der dreisträngige Motor M1 mit dem einsträngigen Motor M2 oder dem einsträngigen Motor M3 parallel betrieben wird, ist unerheblich.

Die Motorsteuerung wird über einen Spannungseingang 10 an einer Wechselspannung betrieben, indem die Wechselspannung des Spannungseingangs 10 über einen Gleichrichter 11 in eine Gleichspannung gewandelt und dann mittels eines Glättungskondensators (nicht gezeigt) geglättet wird. Die geglättete Gleichspannung wird nun als Zwischenkreisspannung parallel an die erste Halbbrücke 12 und an die zweite Halbbrücke 13 gelegt, welche gemeinsam die erste H-Brücke 15 bilden. Den beiden Halbbrücken 12, 13 ist der dreisträngige Motor M1 zugeordnet, welcher von der ersten H-Brücke 15 betrieben werden kann. Hierzu weist der Umrichter eine Steuer- oder Regeleinrichtung 17 auf, die über die Dioden D1, D2, D3, D4 jeweils mit den vier Leistungsschaltern T1-T4 verbunden. Auch sind die beiden Messwiderstände R1, R2 mit der Steuer- oder Regeleinrichtung 17 verbunden, so dass im Betrieb die Ströme in dem dreisträngigen Motor M1 erfasst und der dreisträngige Motor M1 hierauf basierend von der Steuer- oder Regeleinrichtung 17 geregelt betrieben werden kann. Die einsträngigen Motoren M2, M3 werden mit einer zweiten H-Brücke 16 seitens der Steuer- oder Regeleinrichtung 17 betrieben. Hierzu ist die Steuer- oder Regeleinrichtung 17 über die Dioden D3, D4, D5, D6 jeweils mit den vier Leistungsschaltern T4-T6 verbunden. Auch sind die beiden Messwiderstände R2, R3 mit der Steuer- oder Regeleinrichtung 17 verbunden. Entsprechend können die einsträngigen Motoren M2, M3 seitens der Steuer- oder Regeleinrichtung 17 geregelt, basierend auf den Strömen im Betrieb, betrieben werden.

Die zweite Halbbrücke 13 kann somit zum einen entweder von der ersten H-Brücke 15 zum Betreiben des dreisträngigen Motors M1 oder von der zweiten H-Brücke 16 zum Betreiben der einsträngigen Motoren M2, M3 verwendet werden. Zum anderen kann die zweite Halbbrücke 13 auch gleichzeitig als Bestandteil beider H-Brücken 15, 16 genutzt bzw. betrieben werden, um Motoren M1, M2 bzw. M3 gleichzeitig und somit parallel zueinander zu betreiben.

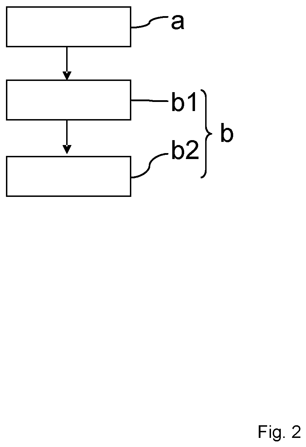

Die Motorsteuerung ist ausgebildet, ein in nachfolgender Fig. 2 gezeigtes Verfahren auszuführen.

Fig. 2 zeigt ein Ablaufdiagramm eines erfindungsgemäßen Verfahrens. Das Verfahren ist zur gleichzeitigen Ansteuerung der in Fig. 1 gezeigten Motoren ausgelegt, d.h. dem dreisträngigen Motor mit einem der beiden einsträngigen Motoren, wobei das Verfahren z.B. mittels der in Fig. 1 gezeigten Motorsteuerung ausgeführt wird. Das Verfahren weist folgende Schritte auf: Es werden ein Schritt a) Takten der zweiten Phase des Umrichters mit einem vorgegebenen Tastverhältnis des dritten Leistungsschalters und des vierten Leistungsschalters und ein Schritt b) Berechnen einer Schaltzeit der ersten Leistungsschalters aus Sollwerten der Sollspannung der ersten Phase und der Sollspannung der zweiten Phase ausgeführt. Der Schritt b) weist einen Schritt b1) Berechnen eines Potentials eines Sternpunktes bei dem in Schritt a) vorgegebenen Tastverhältnis und einen Schritt b2) Berechnen der Einschaltzeit des ersten Leistungsschalters mittels dew berechneten Potentials des Sternpunktes bei dem in Schritt a) vorgegebenen Tastverhältnis aufweist.

### Bezugszeichenliste

- D1-D6: Diode
- i: Strom
- iᵤ: in der ersten Phase fließender Strom
- iᵥ: in der zweiten Phase fließender Strom
- i_{w}: in der dritten Phase fließender Strom
- M1: dreisträngiger Motor
- M2, M3: jeweils einsträngiger Motor
- R1-R3: Messwiderstände; Shunts
- Rel1,Rel2: Relais
- T1-T6: Leistungsschalter
- u: Spannung
- U: erste Phase
- V: zweite Phase
- W: dritte Phase

- 10: Spannungseingang
- 11: Gleichrichter
- 12: erste Halbbrücke
- 13: zweite Halbbrücke
- 14: dritte Halbbrücke
- 15: erste H-Brücke
- 16: zweite H-Brücke
- 17: Regel- oder Steuereinrichtung

## Patentansprüche

1. Verfahren zur gleichzeitigen Ansteuerung eines dreisträngigen Motors (M1) in einem zweiphasigen Betrieb und eines einsträngigen Motors (M2 oder M3) eines elektrischen Haushaltsgeräts mittels eines dreiphasigen (U, V, W) Umrichters derart, dass der dreisträngige Motor (M1) mittels einer ersten Phase (U) und einer zweiten Phase (V) des dreiphasigen (U, V, W) Umrichters bestromt wird und der einsträngige Motor (M2 oder M3) mittels der zweiten Phase (V) und einer dritten Phase (W) des dreiphasigen (U, V, W) Umrichters bestromt wird, wobei der dreisträngige Motor (M1) in der ersten Phase mittels eines ersten Leistungsschalters (T1) und eines zweiten Leistungsschalters (T2) komplementär geschaltet wird und in der zweiten Phase mittels eines dritten Leitungsschalters (T3) und eines vierten Leistungsschalters (T4) komplementär geschaltet wird, wobei das Verfahren folgende Schritte aufweist:
a) Takten der zweiten Phase (V) des Umrichters mittels Pulsweitenmodulation mit einem vorgegebenen Tastverhältnis des dritten Leistungsschalters (T3) und des vierten Leistungsschalters (T4);
b) Berechnen einer Schaltzeit des ersten Leistungsschalters (T1) aus Sollwerten der Sollspannung der ersten Phase (U) und der Sollspannung der zweiten Phase (V),
wobei der Schritt b) einen Schritt b1) Berechnen eines Potentials eines Sternpunktes bei dem in Schritt a) vorgegebenen Tastverhältnis und einen Schritt b2) Berechnen der Einschaltzeit des ersten Leistungsschalters (T1) mittels des berechneten Potentials des Sternpunktes bei dem in Schritt a) vorgegebenen Tastverhältnis aufweist.

2. Verfahren nach Anspruch 1, **dadurch gekennzeichnet, dass** der Schritt b1) das Berechnen des Potentials des Sternpunktes bei dem in Schritt a) vorgegebenen Tastverhältnis anhand eines Phasenpotentials der zweiten Phase (V) und der Sollspannung der zweiten Phase (V) aufweist und/oder Schritt b1) das Berechnen des Potentials des Sternpunktes bei dem in Schritt a) vorgegebenen Tastverhältnis anhand folgender Formel (1) aufweist: $Uharm = U 20 - Us 2$ wobei Uharm das Potential des Sternpunktes bei dem in Schritt a) vorgegebenen Tastverhältnis darstellt, U20 das Phasenpotential der zweiten Phase (V) darstellt und Us2 die Sollspannung der zweiten Phase (V) darstellt.

3. Verfahren nach Anspruch 1 oder 2, **dadurch gekennzeichnet, dass** der Schritt b2) das Berechnen der Einschaltzeit des ersten Leistungsschalters (T1) anhand des in dem Schritt b1) berechneten Potentials des Sternpunkses bei dem Schritt a) vorgegebenen Tastverhältnis, einer Sollspannung der ersten Phase (U) und einer Amplitude einer Zwischenkreisspannung aufweist und/oder Schritt b2) das Berechnen der Einschaltzeit des ersten Leistungsschalters (T1) anhand folgender Formel (2) aufweist: $T 1 on = Tpwm x \left(Us1+Uharm\right) / Udc$ wobei T1on die Einschaltzeit des ersten Leistungsschalters (T1) darstellt, Tpwm eine feste Periodendauer der Pulsweitenmodulation darstellt, Us1 die Sollspannung der ersten Phase (U) darstellt, Uharm das Potential des Sternpunktes bei dem in Schritt a) vorgegebenen Tastverhältnis darstellt und Udc die Amplitude der Zwischenkreisspannung darstellt.

4. Verfahren nach einem der vorangehenden Ansprüche, **dadurch gekennzeichnet, dass** eine Einschaltzeit des dritten Leistungsschalters (T3) so gewählt wird, dass ein fixes Phasenpotential der zweiten Phase vorzugsweise auf Udc/2 entsteht, wobei das Phasenpotential der zweiten Phase bevorzugt eingestellt wird anhand der Formel (3) $U 20 = Udc x T 3 on / Tpwm$ wobei U20 das Phasenpotential der zweiten Phase (V) darstellt, Udc die Amplitude der Zwischenkreisspannung darstellt, T3on die Einschaltzeit des dritten Leistungsschalters (T3) darstellt und Tpwm eine feste Periodendauer der Pulsweitenmodulation darstellt.

5. Verfahren nach einem der vorangehenden Ansprüche, **dadurch gekennzeichnet, dass** die erste, zweite und/oder dritte Phase (U, V, W) der Motoren (M1, M2, M3) jeweils mit einem vorbestimmten PWM-Muster angesteuert wird und/oder der Umrichter pseudo-Sinussignale mittels Pulsweitenmodulation erzeugt.

6. Motorsteuerung, aufweisend einen Umrichter, der ausgebildet ist, einen dreisträngigen Motor (M1) in einem zweiphasigen Betrieb und einen einsträngigen Motors (M2, M3) eines elektrischen Haushaltsgeräts gemäß einem Verfahren nach einem der vorangehenden Ansprüche gleichzeitig anzusteuern.

7. Motorsteuerung nach Anspruch 6, **dadurch gekennzeichnet, dass** der Umrichter eine B6 Brücke mit dem ersten Leistungsschalter (T1), dem zweiten Leistungsschalter (T2), dem dritten Leistungsschalter (T3), dem vierten Leistungsschalter (T4), einem fünften Leistungsschalter (T5) und einem sechsten Leistungsschalter (T6) und eine Steuereinrichtung aufweist, die ausgebildet ist, die ersten bis sechsten Leistungsschalter (T1-T6) zu steuern, wobei der einsträngige Motor (M2, M3) in der dritten Phase (W) mittels des fünften Leistungsschalters (T5) und des sechsten Leistungsschalters (T6) komplementär geschaltet wird.

8. Elektrisches Haushaltsgerät, aufweisend einen dreisträngigen Motor (M1) und einen einsträngigen Motors (M2, M3) und die Motorsteuerung nach Anspruch 6 oder 7.

9. Elektrisches Haushaltsgerät nach Anspruch 8, **dadurch gekennzeichnet, dass** es als Geschirrspüler, Desinfektor, Waschautomat, Waschtrockner oder Trockner ausgebildet ist.

10. Elektrisches Haushaltsgerät nach Anspruch 8 oder 9, **dadurch gekennzeichnet, dass** die mehreren Motoren (M1, M2, M3) jeweils ein Motor (M1) einer Umwälzpumpe, ein Motor (M2) einer Ablaufpumpe (M2) und ein Motor (M3) eines Heißluftgebläse (M3) sind.

## Claims

1. Method for simultaneously controlling a three-phase motor (M1) in two-phase operation and a single-phase motor (M2 or M3) of an electrical domestic appliance by means of a three-phase (U, V, W) inverter, such that the three-phase motor (M1) is energised by means of a first phase (U) and a second phase (V) of the three-phase (U, V, W) inverter and the single-phase motor (M2 or M3) is energised by means of the second phase (V) and a third phase (W) of the three-phase (U, V, W) inverter, wherein the three-phase motor (M1) is switched complementarily in the first phase by means of a first circuit breaker (T1) and a second circuit breaker (T2) and is switched complementarily in the second phase by means of a third circuit breaker (T3) and a fourth circuit breaker (T4), wherein the method comprises the following steps:
a) clocking the second phase (V) of the inverter by means of pulse width modulation with a specified duty cycle of the third circuit breaker (T3) and the fourth circuit breaker (T4);
b) calculating a switching time of the first circuit breaker (T1) from target values of the target voltage of the first phase (U) and the target voltage of the second phase (V),
wherein step b) comprises a step b1) calculating a potential of a neutral point at the duty cycle specified in step a) and a step b2) calculating the activation time of the first circuit breaker (T1) using the calculated potential of the neutral point at the duty cycle specified in step a).

2. Method according to claim 1, **characterised in that** step b1) comprises calculating the potential of the neutral point at the duty cycle specified in step a) using a phase potential of the second phase (V) and the target voltage of the second phase (V), and/or step b1) comprises calculating the potential of the neutral point at the duty cycle specified in step a) using the following formula (1): $Uharm = U 20 - Us 2$
where Uharm represents the potential of the neutral point at the duty cycle specified in step a), U20 represents the phase potential of the second phase (V) and
Us2 represents the target voltage of the second phase (V).

3. Method according to claim 1 or 2, **characterised in that** step b2) comprises calculating the activation time of the first circuit breaker (T1) using the potential, calculated in step b1), of the neutral point at the duty cycle specified in step a), a target voltage of the first phase (U) and an amplitude of an intermediate circuit voltage and/or step b2) comprises calculating the activation time of the first circuit breaker (T1) using the following formula (2): $T 1 on = Tpwm x \left(Us1+Uharm\right) / Udc$ where T1on represents the activation time of the first circuit breaker (T1), Tpwm represents a fixed period of the pulse width modulation, Us1 represents the target voltage of the first phase (U), Uharm represents the potential of the neutral point at the duty cycle specified in step a), and Ude represents the amplitude of the intermediate circuit voltage.

4. Method according to any of the preceding claims, **characterised in that** an activation time of the third circuit breaker (T3) is selected such that a fixed phase potential of the second phase is preferably created at Udc/2, wherein the phase potential of the second phase is preferably set according to formula (3) $U 20 = Udc x T 3 on / Tpwm$ where U20 represents the phase potential of the second phase (V), Udc represents the amplitude of the intermediate circuit voltage, T3on represents the activation time of the third circuit breaker (T3), and Tpwm represents a fixed period of the pulse width modulation.

5. Method according to any of the preceding claims, **characterised in that** the first, second and/or third phase (U, V, W) of the motors (M1, M2, M3) is each controlled with a predetermined PWM pattern and/or the inverter generates pseudo sine signals using pulse width modulation.

6. Motor controller comprising an inverter configured to simultaneously control a three-phase motor (M1) in two-phase operation and a single-phase motor (M2, M3) of an electrical domestic appliance in accordance with a method according to any of the preceding claims.

7. Motor controller according to claim 6, **characterised in that** the inverter has a B6 bridge with the first circuit breaker (T1), the second circuit breaker (T2), the third circuit breaker (T3), the fourth circuit breaker (T4), a fifth circuit breaker (T5) and a sixth circuit breaker (T6) and a control device configured to control the first to sixth circuit breakers (T1-T6), wherein the single-phase motor (M2, M3) is switched complementarily in the third phase (W) by means of the fifth circuit breaker (T5) and the sixth circuit breaker (T6).

8. Electrical domestic appliance comprising a three-phase motor (M1) and a single-phase motor (M2, M3) and the motor controller according to claim 6 or 7.

9. Electrical domestic appliance according to claim 8, **characterised in that** it is designed as a dishwasher, disinfector, washing machine, washer-dryer or dryer.

10. Electrical domestic appliance according to claim 8 or 9,
**characterised in that** the plurality of motors (M1, M2, M3) are each a motor (M1) of a circulating pump, a motor (M2) of a discharge pump (M2) and a motor (M3) of a hot air blower (M3).

## Revendications

1. Procédé permettant la commande simultanée d'un moteur à trois fils (M1) en fonctionnement biphasé et d'un moteur à un fil (M2 ou M3) d'un appareil électroménager au moyen d'un convertisseur triphasé (U, V, W) de telle sorte que le moteur à trois fils (M1) est alimenté au moyen d'une première phase (U) et d'une deuxième phase (V) du convertisseur triphasé (U, V, W) et que le moteur à un fil (M2 ou M3) est alimenté au moyen de la deuxième phase (V) et d'une troisième phase (W) du convertisseur triphasé (U, V, W), dans lequel le moteur à trois fils (M1) est commuté de manière complémentaire dans la première phase au moyen d'un premier commutateur de puissance (T1) et d'un deuxième commutateur de puissance (T2) et est commuté de manière complémentaire dans la deuxième phase au moyen d'un troisième commutateur de puissance (T3) et d'un quatrième commutateur de puissance (T4), dans lequel le procédé présente les étapes suivantes :
a) synchronisation de la deuxième phase (V) du convertisseur au moyen d'une modulation de largeur d'impulsion avec un rapport d'impulsions prédéterminé du troisième commutateur de puissance (T3) et du quatrième commutateur de puissance (T4) ;
b) calcul d'un temps de commutation du premier commutateur de puissance (T1) à partir de valeurs de consigne de la tension de consigne de la première phase (U) et de la tension de consigne de la deuxième phase (V), dans lequel l'étape b) comprend une étape b1) de calcul d'un potentiel d'un point neutre pour le rapport d'impulsions prédéterminé à l'étape a) et une étape b2) de calcul du temps de mise en circuit du premier commutateur de puissance (T1) au moyen du potentiel calculé du point neutre pour le rapport d'impulsions prédéterminé à l'étape a).

2. Procédé selon la revendication 1, **caractérisé en ce que** l'étape b1) présente le calcul du potentiel du point neutre pour le rapport d'impulsions prédéterminé à l'étape a) à l'aide d'un potentiel de phase de la deuxième phase (V) et de la tension de consigne de la deuxième phase (V) et/ou l'étape b1) présente le calcul du potentiel du point neutre pour le rapport d'impulsions prédéterminé à l'étape a) à l'aide de la formule (1) suivante : $Uharm = U 20 - Us 2$
où Uharm représente le potentiel du point neutre pour le rapport d'impulsions prédéterminé à l'étape a), U20 représente le potentiel de phase de la deuxième phase (V), et
Us2 représente la tension de consigne de la deuxième phase (V).

3. Procédé selon la revendication 1 ou 2, **caractérisé en ce que** l'étape b2) présente le calcul du temps de mise en circuit du premier commutateur de puissance (T1) à l'aide du potentiel du point neutre calculé à l'étape b1) pour le rapport d'impulsions prédéterminé à l'étape a), d'une tension de consigne de la première phase (U) et d'une amplitude d'une tension de circuit intermédiaire et/ou l'étape b2) présente le calcul du temps de mise en circuit du premier commutateur de puissance (T1) à l'aide de la formule (2) suivante : $T 1 on = Tpwm \times \left(Us1+Uharm\right) / Udc$ où T1on représente le temps de mise en circuit du premier commutateur de puissance (T1), Tpwm représente une période fixe de la modulation de largeur d'impulsion, Us1 représente la tension de consigne de la première phase (U), Uharm représente le potentiel du point neutre pour le rapport d'impulsions prédéterminé à l'étape a) et Udc représente l'amplitude de la tension de circuit intermédiaire.

4. Procédé selon l'une des revendications précédentes, **caractérisé en ce qu'**un temps de mise en circuit du troisième commutateur de puissance (T3) est choisi de sorte à obtenir un potentiel de phase fixe de la deuxième phase, de préférence à Udc / 2, dans lequel le potentiel de phase de la deuxième phase est de préférence réglé à l'aide de la formule (3) $U 20 = Udc \times T 3 on / Tpwm$ où U20 représente le potentiel de phase de la deuxième phase (V), Udc représente l'amplitude de la tension de circuit intermédiaire, T3on représente le temps de mise en circuit du troisième commutateur de puissance (T3) et Tpwm représente une période fixe de la modulation de largeur d'impulsion.

5. Procédé selon l'une des revendications précédentes,
**caractérisé en ce que** la première, la deuxième et/ou la troisième phase (U, V, W) des moteurs (M1, M2, M3) sont respectivement commandées par un modèle PWM prédéterminé et/ou le convertisseur génère des signaux pseudosinusoïdaux au moyen d'une modulation de largeur d'impulsion.

6. Dispositif de commande de moteur, présentant un convertisseur configuré pour commander simultanément un moteur à trois fils (M1) en fonctionnement biphasé et un moteur à un fil (M2, M3) d'un appareil électroménager selon un procédé selon l'une des revendications précédentes.

7. Dispositif de commande de moteur selon la revendication 6,
**caractérisé en ce que** le convertisseur présente un pont B6 comportant le premier commutateur de puissance (T1), le deuxième commutateur de puissance (T2), le troisième commutateur de puissance (T3), le quatrième commutateur de puissance (T4), un cinquième commutateur de puissance (T5) et un sixième commutateur de puissance (T6) et un appareil de commande, lequel est configuré pour commander les premier à sixième commutateurs de puissance (T1-T6), dans lequel le moteur à un fil (M2, M3) est commuté de manière complémentaire dans la troisième phase (W) au moyen du cinquième commutateur de puissance (T5) et du sixième commutateur de puissance (T6).

8. Appareil électroménager, présentant un moteur à trois fils (M1) et un moteur à un fil (M2, M3) et le dispositif de commande de moteur selon la revendication 6 ou 7.

9. Appareil électroménager selon la revendication 8, **caractérisé en ce qu'**il est conçu comme un lave-vaisselle, un désinfecteur, un lave-linge automatique, un lave-linge séchant ou un sèche-linge.

10. Appareil électroménager selon la revendication 8 ou 9,
**caractérisé en ce que** les moteurs (M1, M2, M3) sont respectivement un moteur (M1) d'une pompe de circulation, un moteur (M2) d'une pompe de vidange (M2) et un moteur (M3) d'une soufflante d'air chaud (M3).
